# FASCICULE DE BREVET EUROPEEN

(11) **EP 1 326 455 B1**
(45) Date de publication et mention de la délivrance du brevet: **08.08.2007**
(21) Numéro de dépôt: 02292806.3
(22) Date de dépôt: 12.11.2002
(51) Int. Cl.: H04Q 7/22

(54) **Procédé de gestion de messages téléphoniques de type SMS dans un réseau de télécommunications**
Verfahren zur Verwaltung von Telephonischen SMS Nachrichten in einem Telekommunikationsnetz
Method for management of telephone SMS messages in a telecommunications network

(30) Priorité: 03.01.2002 FR 0200038
(43) Date de publication de la demande: 09.07.2003
(73) Titulaire: Alcatel Lucent, 75008 Paris (FR)
(72) Inventeur: Pinault, Francis, 92270 Bois-Colombes (FR)
(74) Mandataire: Sciaux, Edmond

(56) Documents cités:
- EP-A- 1 158 818
- DE-A- 10 061 452
- US-A- 6 125 281

## Description

La présente invention se rapporte au domaine des télécommunications. Plus spécifiquement, elle concerne un procédé de gestion de messages téléphoniques de type SMS dans un réseau de télécommunication.

De manière connue, certains terminaux téléphoniques tels que les téléphones mobiles de type GSM (Global System for Mobile communications en anglais) peuvent recevoir des messages textuels tels que les courts messages radiotéléphoniques SMS (Short Message Service en anglais) définis au niveau européen par l'ETSI (European Télécommunication Standards Institute en anglais) et repris plus largement par exemple par l'ITU (International Télécommunication Union en anglais).

Actuellement, afin de conserver le message reçu pour une utilisation ultérieure, ce message est stocké au sein du terminal téléphonique récepteur par exemple, s'il s'agit d'un terminal GSM, dans la carte SIM (Subscriber Identity Module en anglais) qui possède une mémoire de capacité réduite. Les possibilités de stockage de plusieurs messages sont donc très limitées même si sur certains terminaux, il est possible de les stocker sur mémoire interne au terminal mais elle-même de taille limitée.

Une autre description peut être trouvé dans le document D1: DE 10061452 (GRUNDIG) 19 avril 2001.

En outre, se développent de plus en plus des messages téléphoniques de format de type SMS et porteurs d'informations multimédia comme de la musique ou du graphique ou même de fichiers attachés. De tels messages, transmis par liaisons radios ou par d'autres types de liaisons téléphoniques, occupent encore davantage d'espace mémoire renforçant ainsi les problèmes de stockage.

L'invention a pour objet de rendre possible le stockage du contenu de plusieurs messages téléphoniques de type SMS reçus par un terminal téléphonique.

L'invention a également pour objet de rendre accessible le contenu d'un message téléphonique de type SMS par un autre équipement que le terminal téléphonique récepteur du message.

Aussi, la présente invention présente un procédé de gestion de messages téléphoniques de type SMS dans un réseau de télécommunication, ledit procédé comprenant une étape de réception d'un message téléphonique de type SMS comprenant des informations par un terminal téléphonique dudit réseau :
**caractérisé en ce qu**'il comprend les étapes suivantes :
- une étape de renvoi desdites informations à un serveur dudit réseau de télécommunication,
- une étape d'identification dudit terminal téléphonique,
**et en ce qu**'il comporte en outre les étapes suivantes successives :
- une étape de stockage desdites informations dans une mémoire dudit serveur associée audit terminal téléphonique,
- une étape d'envoi desdites informations stockées à un équipement de traitement de données dudit réseau de télécommunication et sélectionné en fonction dudit terminal téléphonique.

Le réseau de télécommunication offrant le service de téléphonie peut être privé, par exemple de type RPIS (Réseau Privé à Intégration de Services) et destiné par exemple à une entreprise, à un groupe d'entreprises et à leurs visiteurs dûment déclarés, ou loués à des abonnés. Le réseau privé peut en outre être local de type LAN (Local Area Network en anglais) c'est-à-dire circonscrit à une zone.

Le procédé selon l'invention permet le stockage des informations de chaque message téléphonique de type SMS reçu par un terminal téléphonique au sein de la mémoire qui lui est associée dans le serveur selon l'invention.

Un message téléphonique de type SMS selon l'invention contient des informations qui sont les données utiles correspondant au contenu à transmettre (texte, icône, image et/ou son, englobés ou non dans un fichier attaché) et éventuellement également des données de contrôle assurant la transmission correcte du message et par exemple sa sécurisation. Les informations renvoyées comme les informations stockées selon l'invention sont par exemple les données utiles du message téléphonique de type SMS.

L'étape de renvoi des informations reçues au serveur peut être initiée par l'utilisateur du terminal téléphonique recevant le message ou par le serveur par exemple interrogeant régulièrement le terminal. L'étape de renvoi peut, par exemple, être réalisée à partir d'applications développées dans le cadre du GSM comme l'application SATK (Sim Application Tool Kit en anglais), cette dernière permettant de présenter un menu spécifique indépendant du terminal et permettant à l'utilisateur d'effectuer une action de renvoi du message téléphonique.

L'étape d'identification selon l'invention du terminal téléphonique permet d'identifier le propriétaire ou utilisateur principal du terminal par exemple, pour un téléphone cellulaire, par l'outil CLIP (Calling Line Identification Presentation en anglais). Cette étape d'identification peut être réalisée par exemple en découvrant des informations propres au contenu du message de type SMS et portant l'identification de l'émetteur ou par examen d'un message de signalisation envoyé par le terminal et distinct du message de type SMS.

L'étape d'identification réalisée, il est possible de sélectionner le ou les équipements de traitement de données (assistants numériques personnels, ordinateurs...) rattachés à ce propriétaire ou utilisateur principal et auxquels seront envoyés les informations préalablement stockées. Par ailleurs, la sélection de l'équipement peut aussi être implicite.

Ainsi, le procédé selon l'invention augmente la capacité de gestion de la mobilité des membres du réseau de télécommunication pour un coût modéré de transmission des informations.

Le procédé selon l'invention permet en outre d'attribuer la gestion d'informations confidentielles au serveur au lieu du terminal téléphonique.

L'étape d'envoi des informations stockées peut être initiée par l'utilisateur de l'équipement de traitement de données par exemple par téléchargement des informations stockées sous forme d'une page « Web », via le réseau Internet ou un réseau de type Intranet inclus dans le réseau de télécommunication selon l'invention.

Un système d'accusé réception peut également être mis en place, le serveur et/ou l'équipement de traitement de données indiquant au terminal téléphonique l'un que le stockage a bien été effectué, l'autre que les informations ont été reçues, respectivement.

Avantageusement, le procédé selon l'invention peut comprendre une étape de création d'un courrier électronique incluant les informations destinées à l'équipement de traitement de données.

Cette étape de création d'un courrier électronique peut être réalisée au sein du terminal téléphonique, avant l'étape de renvoi, ou après l'étape de stockage, par exemple au sein du serveur selon l'invention. Le courrier créée peut être ensuite géré par une application dédiée courrier électronique standard par exemple « LOTUS DOMINO » et « OUTLOOK » (marques déposées) ou propriétaire du serveur.

Le terme courrier électronique désigne des données qui sont susceptibles d'être transmises, par exemple, par le serveur selon un protocole de type IP (Internet Protocol en anglais) ou, par exemple, par le terminal selon l'invention de type téléphone cellulaire à l'aide d'une passerelle WAP (Wireless Application Protocol en anglais). Le courrier électronique peut être de type texte et/ou voix et contenir des fichiers attachés. Il présente notamment l'intérêt de dater l'envoi du message téléphonique de type SMS et permet d'ajouter des données supplémentaires.

De préférence, le procédé selon l'invention peut comprendre une étape d'analyse des informations renvoyées afin d'identifier leur nature (format message téléphonique de type SMS ou courrier électronique, type et nombre de données utiles et de données de contrôle...).

L'invention propose aussi un serveur du réseau de télécommunication pour la mise en oeuvre du procédé décrit précédemment **caractérisé en qu**'il comprend :
- des moyens de réception des informations de messages téléphoniques de type SMS,
- des moyens d'identification de terminaux téléphoniques,
- ladite mémoire associée audit terminal téléphonique,
- des moyens d'envoi des informations de messages téléphoniques de type SMS.

Avantageusement, le serveur peut comprendre des moyens de création de courriers électroniques contenant des informations de messages téléphoniques de type SMS.

De préférence, le serveur peut comprendre des moyens d'analyse des informations de messages téléphoniques de type SMS.

Dans un mode de réalisation préféré, la mémoire associée du serveur est temporaire.

De cette façon, la mémoire peut par exemple être associée successivement à des terminaux distincts. Par ailleurs, la mémoire peut présenter certaines caractéristiques connues d'une mémoire (mémoire active, adressable...). A titre d'exemple, la mémoire peut être de type DRAM (Dynamic Random Access Memory en anglais).

L'invention propose également un terminal téléphonique du réseau télécommunication pour la mise en oeuvre du procédé décrit précédemment, le terminal comprenant des moyens de réception de messages téléphoniques de type SMS, **caractérisé en qu**'il comprend des moyens de gestion des informations des messages téléphoniques de type SMS et des moyens d'envoi des informations de messages téléphoniques de type SMS.

Les moyens de gestion peuvent comprendre par exemple un menu de présentation indiquant à l'utilisateur les possibilités offertes de gestion de messages téléphoniques de type SMS : conservation dans la mémoire avant renvoi, suppression du message, demande d'accusé réception, sélection des informations à renvoyer, format des informations renvoyées, présélection des équipements de traitement de données destinataires...

Dans un mode de réalisation de l'invention, les moyens de gestion comprennent des moyens de conversion du message téléphonique de type SMS en un courrier électronique contenant par exemple les données utiles et d'autres informations ajoutées (date de réception, nom de l'émetteur du message...).

Le terminal peut être une station ou un téléphone mobile ou fixe car même si le standard SMS a été défini pour des applications mobiles, il peut être utilisé pour des applications qui concerneraient des terminaux téléphoniques fixes et/ou raccordés au réseau de télécommunication de l'invention par d'autre moyens qu'un réseau cellulaire.

De préférence, le terminal selon l'invention peut être choisi parmi les terminaux mobiles tels que les téléphones de type GSM, DECT (Digital European Cordless Telecommunications en anglais), PCS (Personal Communication Services en anglais) ou UMTS (Universal Mobile Telecommunications System en anglais).

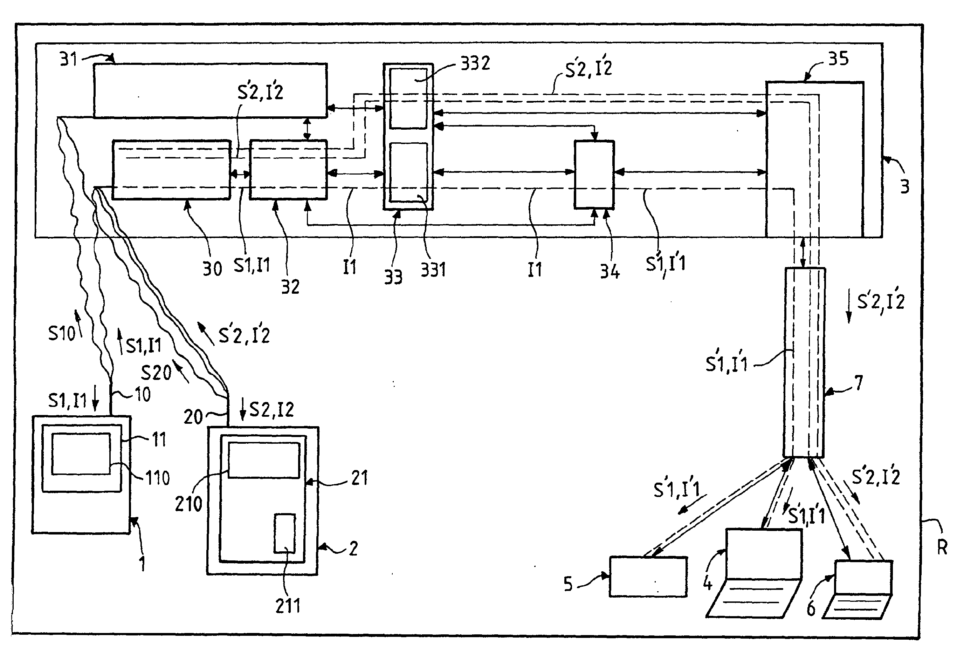

Les caractéristiques et objets de la présente invention ressortiront de la description détaillée donnée ci-après en regard de la figure annexée, présentée à titre illustratif et nullement limitatif.

La figure unique représente le schéma synoptique d'un exemple de mise en oeuvre préférée du procédé selon l'invention de gestion de messages téléphoniques de type SMS dans un réseau de télécommunication.

La figure unique présente ainsi un réseau de télécommunication R qui est un réseau local d'entreprise offrant un service de radiotéléphonie de type GSM entre téléphones GSM 1, 2. Le réseau R offre également un service de radiomessagerie permettant la transmission de messages radiotéléphoniques SMS entre les téléphones GSM ainsi qu'un service de gestion de messages radiotéléphoniques permettant la transmission des informations des messages SMS à des équipements de traitement de données tels que des ordinateurs 4 et des assistants numériques personnels de type tablette 5 ou ordinateur de poche 6. Ces équipements 4, 5, 6 sont connectés à un réseau Intranet inclus dans le réseau R, de façon à recevoir des courriers électroniques ou à télécharger des pages « Web » par des liaisons 7 de type IP.

Le réseau R comprend en outre un serveur 3 qui joue le rôle d'intermédiaire entre les téléphones GSM émetteurs d'informations de messages SMS et les équipements 4, 5, 6 destinataires.

Chaque téléphone GSM 1, 2 comprend :
- une antenne 10, 20 capable de recevoir des appels et des messages SMS et de renvoyer ces messages SMS ou au moins les données utiles de ces messages SMS,
- des moyens de gestion 11, 21 des informations de messages SMS incluant un menu de présentation des possibilités offertes 110, 210.

Certains téléphones GSM 2 peuvent être connectés au réseau Intranet par le WAP et aussi comprendre des moyens de conversion du message téléphonique de type SMS en un courrier électronique contenant les informations du message SMS et en particulier les données utiles.

Le serveur 3 comprend :
- des moyens de réception 30 des informations de messages SMS,
- des moyens d'identification 31 de type CLIP des téléphones GSM 1, 2 du réseau R renvoyant les informations des messages SMS reçus,
- des moyens d'analyse 32 des informations renvoyées,
- un espace mémoire 33 comprenant des mémoires par exemple temporaires 331, 332 et chacune associées à un téléphone GSM 1, 2 et stockant toutes ou une partie des informations renvoyées et analysées,
- des moyens de création 34 de courriers électroniques contenant les informations stockées,
- des moyens d'envoi 35 des informations stockées par exemple sous forme de courrier électronique.

Décrivons maintenant le chemin (en traits pointillés sur la figure) et l'évolution de deux messages radiotéléphoniques SMS par exemple de type texte S1, S2 respectivement reçus par les téléphones GSM 1, 2.

Chaque message SMS S1, S2 comprend notamment les informations telles que les données utiles I₁, I₂ (informations commerciales, économiques, informations relatives à la sécurité d'un travailleur isolé...).

Le message SMS S1 reçu est géré par des moyens de gestion 11. Le menu de présentation 110, permet de choisir de renvoyer le message SMS tel quel au serveur 3 et par exemple de présélectionner la tablette 4 et l'ordinateur 5 appartenant au propriétaire ou utilisateur du téléphone GSM 1 et destinés à exploiter les données utiles I1.

Ensuite, les moyens de réception 30 reçoivent le message S1 et parallèlement les moyens d'identification 31 reçoivent et identifient le téléphone GSM 1 qui émet un message de signalisation S10 indiquant notamment le renvoi du SMS SI. Ces moyens 31 déduisent alors les équipements destinataires présélectionnés 4, 5 et déterminent la mémoire associée de stockage 331.

En outre, les moyens d'analyse 32 scrutent le message SMS S1 et filtrent les informations superflues et, conjointement avec les moyens 31, envoient les données utiles Il à stocker dans la mémoire 331.

Ensuite, les données utiles stockées Il sont converties par les moyens 34 fournissant sous un format spécifique les données utiles l'1 qui sont transmises dans un courrier électronique S'1, via les moyens 35 et la liaison 7, à la tablette 4 et à l'ordinateur 5, successivement ou parallèlement.

Le message SMS S2 reçu est géré par des moyens de gestion 21. Le menu de présentation 210 dirige le message SMS S2 vers les moyens de création d'un message électronique 211 convertissant le message SMS S2 en un courrier électronique S'2 contenant notamment sous un format spécifique les données utiles I'2. Le menu 210 permet aussi de demander un accusé réception de la part de l'ordinateur de poche destinataire 6.

Ensuite, les moyens de réception 30 reçoivent le courrier électronique S'2 et parallèlement les moyens d'identification 31 reçoivent et identifient le téléphone GSM 2 émettant un message de signalisation S20 indiquant notamment l'envoi du courrier électronique S'2. Ces moyens 31 localisent aussi l'ordinateur de poche 6 et la mémoire associée de stockage 332.

En outre, les moyens d'analyse 32 reconnaissent le courrier S'2 et le format des informations renvoyées et, en combinaison avec les moyens 31, les envoient dans la mémoire de stockage 332.

Ce courrier électronique S'2 contenant les données utiles l'2 est dirigé ensuite via les moyens 35 et la liaison 7 à l'ordinateur de poche 6. Dès réception, ce dernier crée l'accusé réception demandé.

Bien entendu, la description qui précède a été donnée à titre purement illustratif. On pourra sans sortir du cadre de l'invention remplacer tout moyen par un moyen équivalent.

Le réseau de télécommunication pouvant offrir plusieurs services de téléphonie, certains terminaux téléphoniques selon l'invention peuvent être mobiles et d'autres fixes.

Des mémoires de stockage selon l'invention peuvent aussi bien être permanentes.

Le serveur selon l'invention peut décider des courriers électroniques prioritaires tout comme le serveur peut permettre l'interrogation à distance ou le téléchargement des informations stockées par un équipement ayant un accès autorisé à la mémoire de stockage.

## Revendications

1. Procédé de gestion de messages téléphoniques de type SMS dans un réseau de télécommunication (R), ledit procédé comprenant une étape de réception d'un message téléphonique de type SMS (S1, S2) comprenant des informations (l1, l2) par un terminal téléphonique (1, 2) dudit réseau,
**caractérisé en ce qu**'il comprend les étapes suivantes:
- une étape de renvoi desdites informations (l1, l'2) à un serveur (3) dudit réseau de télécommunication,
- une étape d'identification dudit terminal téléphonique,
**et en ce qu'**il comporte en outre les étapes suivantes successives :
- une étape de stockage desdites informations (l1, l'2) dans une mémoire (331, 332) dudit serveur associée audit terminal téléphonique,
- une étape d'envoi desdites informations stockées (l1, l'2) à un équipement de traitement de données (4, 5, 6) dudit réseau de télécommunication et sélectionné en fonction dudit terminal téléphonique.

2. Procédé selon la revendication 1 **caractérisé en ce qu**'il comprend une étape de création d'un courrier électronique (S'1, S'2) incluant les informations (l'1, l'2) destinées audit équipement de traitement de données (4, 5, 6).

3. Procédé selon la revendication 1 **caractérisé en ce qu**'il comprend une étape d'analyse des informations renvoyées (l1, l'2).

4. Serveur (3) dudit réseau de télécommunication (R) pour la mise en oeuvre du procédé selon l'une des revendications 1 à 3, **caractérisé en qu**'il comprend :
- des moyens de réception (30) des informations de messages téléphoniques de type SMS,
- des moyens d'identification (31) de terminaux téléphoniques,
- ladite mémoire (331, 332) associée audit terminal téléphonique,
- des moyens d'envoi (35) des informations de messages téléphoniques de type SMS.

5. Serveur (3) selon la revendication 4 **caractérisé en qu**'il comprend des moyens de création (34) de courriers électroniques contenant des informations de messages téléphoniques de type SMS.

6. Serveur (3) selon la revendication 4 **caractérisé en qu**'il comprend des moyens d'analyse (32) des informations de messages téléphoniques de type SMS.

7. Serveur (3) selon la revendication 4, **caractérisé en que** ladite mémoire associée (331, 332) est temporaire.

8. Terminal téléphonique (1, 2) dudit réseau de télécommunication (R) pour la mise en oeuvre du procédé selon l'une des revendications 1 à 3, ledit terminal comprenant des moyens de réception (10, 20) de messages téléphoniques de type SMS **caractérisé en qu**'il comprend des moyens de gestion (21) des informations de messages téléphoniques de type SMS et des moyens de renvoi (10, 20) des informations de messages téléphoniques de type SMS.

9. Terminal téléphonique (2) selon la revendication 8 **caractérisé en que** lesdits moyens de gestion (21) comprennent des moyens de conversion (211) du message téléphonique de type SMS en un courrier électronique.

10. Terminal téléphonique (1, 2) selon la revendication 8, caractérisé en qu'il est choisi parmi les terminaux mobiles.

## Claims

1. A method of managing SMS type telephone messages in a telecommunications network (R), said method comprising a step of receiving an SMS type telephone message (S1, S2) containing information (l₁, l₂) in a telephone terminal (1, 2) of said network,
the method being **characterized in that** it comprises the following steps:
a step of forwarding said information (l₁, l'₂) to a server (3) of said telecommunications network; and
· a step of identifying said telephone terminal;
and **in that** it further comprises the following successive steps:
· a step of storing said information (l₁, l'₂) in a memory (331, 332) of said server associated with said telephone terminal; and
· a step of sending said stored information (l₁, l'₂) to data processing equipment (4, 5, 6) of said telecommunications network and selected as a function of said telephone terminal.

2. A method according to claim 1, **characterized in that** it further comprises a step of creating an e-mail (S'1, S'2) including the information (l'₁, l'₂) that is to be sent to said data processing equipment (4, 5, 6).

3. A method according to claim 1, **characterized in that** it further comprises a step of analyzing the forwarded information (l₁, l'₂).

4. A server (3) of said telecommunications network (R) for implementing the method according to any one of claims 1 to 3, **characterized in that** it comprises:
· receiver means (30) for receiving the information of SMS type telephone messages;
· identifier means (31) for identifying telephone terminals;
· said memory (331, 332) associated with said telephone terminal; and
· means (35) for sending the information of the SMS type telephone messages.

5. A server (3) according to claim 4, **characterized in that** it further comprises means (34) for creating e-mail containing the information of SMS type telephone messages.

6. A server (3) according to claim 4, **characterized in that** it further comprises analyzer means (32) for analyzing the information of SMS type telephone messages.

7. A server (3) according to claim 4, **characterized in that** said associated memory (331, 332) is temporary.

8. A telephone terminal (1, 2) of said telecommunications network (R) for implementing the method according to claim 1, said terminal comprising receiver means (10, 20) for receiving SMS type telephone messages and being **characterized in that** it comprises management means (21) for managing SMS type telephone message information, and forwarding means (10, 20) for forwarding SMS type telephone message information.

9. A telephone terminal (2) according to claim 8, **characterized in that** said management means (21) comprise means (211) for converting an SMS type telephone message into an e-mail.

10. A telephone terminal (1, 2) according to claim 8, **characterized in that** it is selected from amongst mobile terminals.

## Patentansprüche

1. Verfahren zur Verwaltung von telefonischen SMS-Nachrichten in einem Telekommunikationsnetz (R), wobei das Verfahren einen Schritt zum Empfang einer Informationen (11, 12) umfassenden telefonischen SMS-Nachricht (S1, S2) durch ein Telefonendgerät (1, 2) dieses Netzes umfasst,
**dadurch gekennzeichnet, dass** es die folgenden Schritte umfasst:
- einen Schritt zur Weiterleitung der Informationen (l1, l'2) an einen Server (3) des Telekommunikationsnetzes;
- einen Schritt zur Identifizierung des Telefonendgerätes;
und **dadurch**, dass es außerdem die folgenden aufeinander folgenden Schritte umfasst:
- einen Schritt zur Speicherung der Informationen (l1, l'2) in einem dem Telefonendgerät zugeordneten Speicher (331, 332) des Servers;
- einen Schritt zum Versand der gespeicherten Informationen (l1, l'2) an eine Datenverarbeitungseinrichtung (4, 5, 6) des Telekommunikationsnetzes, welche in Abhängigkeit von dem Telefonendgerät ausgewählt wird.

2. Verfahren nach Anspruch 1, **dadurch gekennzeichnet, dass** es einen Schritt zur Erstellung einer E-Mail (S'1, S'2) umfasst, welche die für die Datenverarbeitungseinrichtung (4, 5, 6) bestimmten Informationen (l'1, l'2) enthält.

3. Verfahren nach Anspruch 1, **dadurch gekennzeichnet, dass** es einen Schritt zur Analyse der weitergeleiteten Informationen (l1, l'2) umfasst.

4. Server (3) des Telekommunikationsnetzes (R) für die Umsetzung des Verfahrens nach einem der Ansprüche 1 bis 3, **dadurch gekennzeichnet, dass** er umfasst:
- Empfangsmittel (30) für die Informationen von telefonischen SMS-Nachrichten;
- Identifizierungsmittel (31) für Telefonendgeräte;
- den dem Telefonendgerät zugeordneten Speicher (331, 332);
- Versandmittel (35) für die Informationen von telefonischen SMS-Nachrichten.

5. Server (3) nach Anspruch 4, **dadurch gekennzeichnet, dass** er Erstellungsmittel (34) für E-Mails umfasst, die telefonische SMS-Nachrichten enthalten.

6. Server (3) nach Anspruch 4, **dadurch gekennzeichnet, dass** er Analysemittel (32) für die Informationen von telefonischen SMS-Nachrichten umfasst.

7. Server (3) nach Anspruch 4, **dadurch gekennzeichnet, dass** der zugeordnete Speicher (331, 332) des Servers ein temporärer Speicher ist.

8. Telefonendgerät (1, 2) des Telekommunikationsnetzes (R) zur Umsetzung des Verfahrens nach einem der Ansprüche 1 bis 3, wobei das Endgerät Empfangsmittel (10, 20) für telefonische SMS-Nachrichten umfasst, **dadurch gekennzeichnet, dass** es Verwaltungsmittel (21) für telefonische SMS-Nachrichten und Weiterleitungsmittel (10, 20) für die Informationen von telefonischen SMS-Nachrichten umfasst.

9. Telefonendgerät (2) nach Anspruch 8, **dadurch gekennzeichnet, dass** die Verwaltungsmittel (21) Mittel zur Umwandlung (211) der telefonischen SMS-Nachricht in eine E-Mail umfassen.

10. Telefonendgerät (1, 2) nach Anspruch 8, **dadurch gekennzeichnet, dass** es unter mobilen Endgeräten gewählt wird.
